# EUROPÄISCHE PATENTSCHRIFT

(11) **EP 1 410 940 B1**
(45) Veröffentlichungstag und Bekanntmachung des Hinweises auf die Patenterteilung: **15.11.2006**
(21) Anmeldenummer: 03017802.4
(22) Anmeldetag: 05.08.2003
(51) Int. Cl.: B60T 7/12, B60W 10/04, B60W 10/18

(54) **Verfahren für die Steuerung einer Rollsperre für ein Fahrzeug**
Hill holder control method for a vehicle
Procédé de commande d'un dispositif anti-recul pour véhicule

(30) Priorität: 19.10.2002 DE 10248813
(43) Veröffentlichungstag der Anmeldung: 21.04.2004
(73) Patentinhaber: WABCO GmbH & Co. OHG, 30453 Hannover (DE)
(72) Erfinder: Henken, Immanuel, 31867 Lauenau (DE); Schlottmann, Marcel, 30353 Hannover (DE); Struwe, Otmar, 30163 Hannover (DE); Wolff, Hans-Klaus, 31832 Springe (DE)
(74) Vertreter: Schrödter, Manfred

(56) Entgegenhaltungen:
- EP-A- 0 822 129
- WO-A-01/58714
- DE-A- 10 063 061
- DE-A- 10 065 589
- DE-A- 10 151 846
- DE-A- 10 154 633
- DE-A- 19 848 448
- DE-A- 19 909 326
- DE-A- 19 950 034
- US-A1- 2002 020 575

## Beschreibung

Die Erfindung bezieht sich auf ein Verfahren für die Steuerung einer Rollsperre für ein Fahrzeug gemäß dem Oberbegriff des Patentanspruchs 1.

Bei einem derartigen Fahrzeug (insbesondere Nutzfahrzeug) mit aktivierter Rollsperre (RS) wird das Fahrzeug im Stand selbständig durch seine Betriebsbremsanlage gehalten. Zum Anfahren des Fahrzeugs werden dann die Bremsen automatisch gelöst.

Aus der DE 196 21 628 A1 ist ein Verfahren und Vorrichtung zur Steuerung der Bremsanlage eines Fahrzeugs bekannt, wobei bei betätigtem Bremspedal eine sogenannte Hillholder-Funktion eingeleitet wird. Dabei wird die Bremskraft an wenigstens einer Radbremse gehalten, und zwar unabhängig vom Ausmaß der Pedalbetätigung. Diese Bremskraft wird mit Lösen des Bremspedals wieder abgebaut. Insbesondere erfolgt der Bremsdruckabbau beim Lösen der Kupplung bzw. beim Einkuppeln.

Weiter ist aus der DE 100 63 061 A1 ein Verfahren und System zur Anfahrunterstützung eines Kraftfahrzeuges bekannt. Zum Anfahren eines Kraftfahrzeuges wird ein Anfahrwunsch eines Fahrzeugführers ermittelt, wenn bestimmte Bedingungen vorliegen. Ist dies der Fall, werden die im Stillstand von der Betriebs-Bremsanlage erzeugten Bremskräfte abgebaut. Insbesondere werden die Bremsen dann gelöst, wenn das Gaspedal betätigt ist und/oder die Drehzahl des Motors größer als eine vorgegebene Drehzahl im Leerlauf ist und/oder das Motordrehmoment größer als das Leerlaufdrehmoment ist.

Weiter ist aus der EP 0 822 129 B1 ein Hillholder bekannt, bei welchem die Betriebsbremse gelöst wird, sobald das Motormoment zum Anfahren hoch genug ist. Die Aktivierung der Betriebsbremse erfolgt dann, wenn der vom Fahrer ausgesteuerte Bremsdruck zum Halten des Fahrzeugs nicht ausreicht. Beim Lösen der Betriebsbremse zum Anfahren des Fahrzeugs wird die aktuelle Fahrzeugneigung bzw. die Straßensteigung berücksichtigt. Das Bremslösen erfolgt schnell im Gefälle und langsam in einer Steigung.

Nachteilig an diesem Verfahren ist, daß zum Erfassen des Motormomentes ein Momenten-Sensor an der Antriebswelle (teuer) oder ein Fahrpedal-Wegsensor in Verbindung mit einem Motor-Kennfeld (ungenau) benötigt wird. Weiterhin muß bei jedem Anfahrvorgang mit dem Motormoment gegen die Betriebsbremse angefahren werden, was Energieverluste bewirkt.

Schließlich ist aus der DE-OS 24 20 252 eine Feststellbremse für ein Fahrzeug bekannt, welche mit dem Gaspedal gekoppelt ist. Die Feststellbremse ist servounterstützt und wirkt in der Leerlaufstellung des Gaspedals. Sie wird beim Betätigen des Gaspedals automatisch zum Anfahren gelöst. Nachteilig an dieser Anordnung ist, daß die benötigte Servo-Feststellbremse bei jeder Leerlaufstellung des Gaspedals betätigt wird, und deshalb einen hohen Energieverbrauch durch die Servounterstützung benötigt. Außerdem ist ein ständiges Einsetzen einer Bremswirkung in der Leerlaufstellung des Gaspedals während der Fahrt für den Fahrer ungewohnt.

Aus der DE 101 51 846 A1 ist ein Verfahren zum Verhindern eines unbeabsichtigten Wegrollens eines stillstehenden Fahrzeugs bekannt, bei dem ein Haltebremsdruck erst abgebaut wird, nachdem der Fahrpedalweg einen Schwellenwert überschritten hat.

Der Erfindung liegt die Aufgabe zugrunde, ein Verfahren für die Steuerung einer Rollsperre, insbesondere für das Wiederanfahren, für ein Fahrzeug, insbesondere ein Nutzfahrzeug mit elektronischer Bremssteuerung (EBS), anzugeben, welches eine einfache, für den Fahrer leicht erlernbare und komfortable Funktion aufweist und die obengenannten Nachteile vermeidet.

Diese Aufgabe wird durch die im Patentanspruch 1 angegebene Erfindung gelöst. Die Unteransprüche enthalten zweckmäßige Weiterbildungen der Erfindung.

Die Erfindung wird im folgenden anhand einer Zeichnung näher erläutert.

Diese zeigt in
- Fig. 1a: ein Diagramm des Fahrpedal-Weges über der Zeit beim Anfahren mit Komfort-Lösen der Rollsperre;
- Fig. 1b: ein Diagramm des eingesteuerten Bremsdruckes über der Zeit beim Anfahren mit Komfort-Lösen der Rollsperre;
- Fig. 1c: ein Diagramm des Motormomentes über der Zeit beim Anfahren mit Komfort-Lösen der Rollsperre
- Fig. 2a: ein Diagramm des Fahrpedal-Weges über der Zeit beim Anfahren mit Schnellösen der Rollsperre
- Fig. 2b: ein Diagramm des eingesteuerten Bremsdruckes über der Zeit beim Anfahren mit Schnellösen der Rollsperre
- Fig. 2c: ein Diagramm des Motormomentes über der Zeit beim Anfahren mit Schnellösen der Rollsperre
- Fig. 3: ein vereinfachtes Flußdiagramm für das erfindungsgemäße Verfahren.

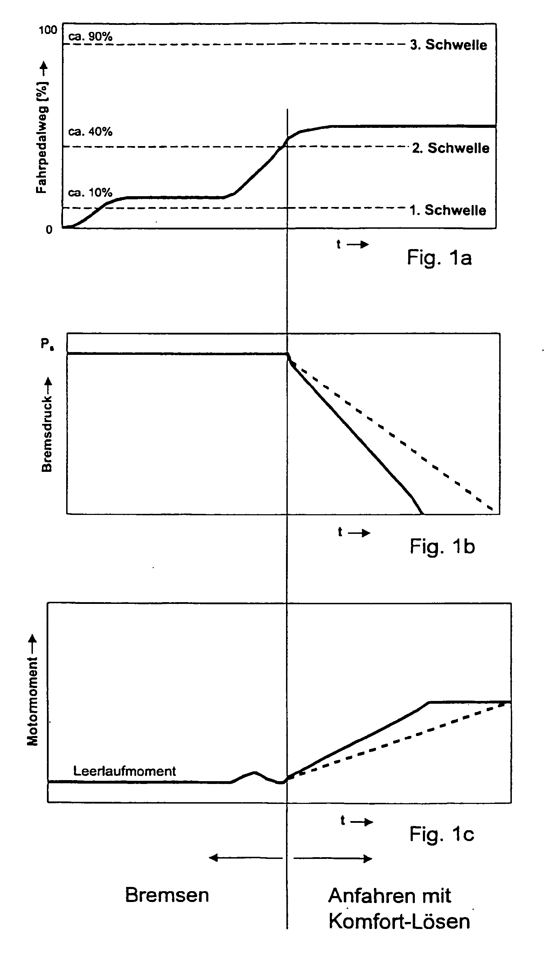

Die Fig. 1a bis 1c zeigen in schematischer Darstellung das Anfahren mit dem sogenannten Komfortlösen der Rollsperre. Es sind für den Anfahrvorgang typische Verläufe dargestellt.

Aus der Fig. 1a geht hervor, daß der Fahrer zum Anfahren das Fahrpedal ausgehend von der Leerlaufstellung (Null Prozent) betätigt. Die Stellung des Fahrpedals wird mit einem Wegsensor abgetastet und einer Elektronik (z.B. EBS) zugeleitet (nicht dargestellt). Zu Beginn des Anfahrens ist die Rollsperre eingelegt, und zwar mit einem Radbremsen-Solldruck Ps (Fig. 1b, Abschnitt "Bremsen"). Hierdurch wird das Fahrzeug z.B. in einer Steigung gehalten. Das Motormoment ist auf dem Leerlaufmoment (Fig. 1c), und die Motordrehzahl auf Leerlaufdrehzahl geregelt.

Sollte das Fahrpedal nicht mindestens bis zu einer ersten Schwelle (etwa 10 Prozent des Gesamtweges) betätigt sein, und ist auch kein anderes Pedal (Kupplung, Betriebsbremse) betätigt, dann geht die Logik der Rollsperren-Elektronik davon aus, daß der Fahrer das Fahrzeug verlassen will. In diesem Fall wird ein Warnton erzeugt und danach die Betriebsbremse mit einer Zeitverzögerung von etwa 1,0 Sekunden entlüftet bzw. gelöst, um dem Fahrer Gelegenheit zu geben, die Feststellbremse zu aktivieren. Damit wird die unerwünschte Verwendung der Rollsperre als Feststellbremse verhindert.

Zum Anfahren bewegt der Fahrer nun das Fahrpedal weiter bis zu einer zweiten Schwelle. Diese liegt bei etwa 40 Prozent des Fahrpedal-Weges. Oberhalb dieser Schwelle erhöhen sich automatisch Drehzahl und Drehmoment des Motors nach einer vorgegebenen Rampenfunktion (s. Fig. 1c, Abschnitt "Anfahren mit Komfort-Lösen"). Die Steigung der Rampe ist vorteilhaft von der Straßensteigung abhängig. Das Fahrzeug ist hierzu vorzugsweise mit einem (dem Fachmann bekannten) elektronischen Gaspedal (e-Gas) ausgerüstet. Der Motor ist in diesem Moment entweder über eine schleifende Kupplung oder über einen Drehmomentwandler (bei Fahrzeugen mit automatischem Getriebe) mit dem Getriebe verbunden. Ein Gang oder eine Fahrstufe ist eingelegt.

Sobald das Fahrpedal die obengenannte zweite Schwelle überschritten hat, was durch den Wegsensor abgefühlt wird, wird ausserdem der pneumatische Haltedruck (Solldruck Ps) in den Radbremsen des Fahrzeugs durch die Rollsperre automatisch nach einer vorgegebenen Funktion verringert (s. Fig. 1b). Dabei wird langsam entlüftet, wenn das Fahrzeug in einer Steigung steht (oberer Verlauf), und schnell, wenn das Fahrzeug in einem Gefälle steht (unterer Verlauf). Der Fahrer bewegt dann das Fahrpedal weiter vorwärts, wobei das Pedal jedoch unterhalb einer dritten Schwelle von etwa 90 Prozent des Pedalweges bleibt. Das Fahrzeug fährt nun in der Komfort-Funktion an.

Zum Anfahren wird vorteilhaft durch eine Elektronik, z.B. eine elektronische Bremssteuerung (EBS) festgestellt, daß der Motor läuft, ein Gang oder eine Fahrstufe eingelegt ist und das Fahrpedal die erste sowie die zweite definierte Schwelle überschritten hat. Diese Informationen sind üblicherweise auf einem Fahrzeug-Datenbus (CAN-Bus) enthalten.

Unmittelbar vor dem Erreichen der zweiten Schwelle des Fahrpedals wird dem Fahrer durch ein optisches oder akkustisches Signal oder durch ein kurzzeitiges Anheben der Motor- Drehzahl bzw. des Motor- Momentes mitgeteilt, das das Anfahren des Fahrzeugs in der Komfort-Betriebsart kurz bevorsteht. Das Anheben der Motordrehzahl wird vom Fahrer wahrgenommen und ist durch eine Kuppe im Momentenverlauf (s. Fig. 1c) dargestellt.

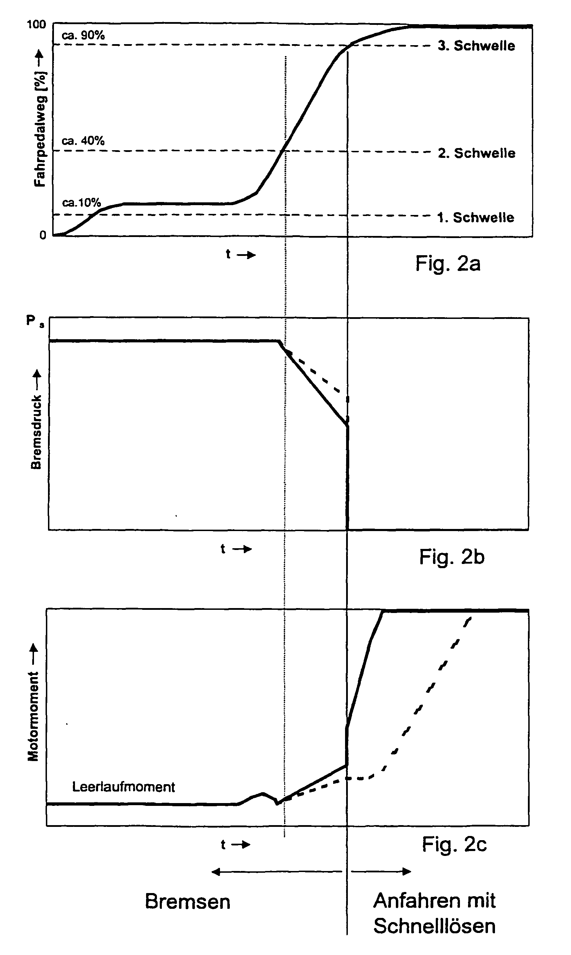

In den Figuren 2a bis 2c ist als alternative Möglichkeit zum Anfahren das sogenannte Schnellösen der Rollsperre dargestellt.

Hierzu bewegt der Fahrer das Fahrpedal schnell bis über eine dritte Schwelle (Kick-down). Die dritte Schwelle liegt bei etwa 90 % des Pedalweges (s. Fig. 2a). Wenn ein solches Kick-down des Fahrpedals durch die Elektronik, z.B. die EBS-Elektronik der Rollsperre, erkannt wird, wird der eingesteuerte Haltedruck (Solldruck Ps) der Rollsperre ab dem Überschreiten der dritten Schwelle schnell, und zwar unabhängig von der Fahrbahnneigung, automatisch abgebaut (s.Fig 2b).

Die Reaktion bei der Überschreitung der zweiten Schwelle entspricht den Fig. 1b und 1c.

Gemäß Fig. 2c wird gleichzeitig automatisch das Motormoment (mit einer Übergangsfunktion) auf den aktuellen Wert des Fahrpedals gesetzt. Dabei entspricht die durchgezogene Linie einem schnellen, und die gestrichelte Linie einem langsameren Anfahrvorgang.

Generell wird als Voraussetzung für eine Aktivierung der Rollsperren-Anfahrfunktion durch die zugehörige Rollsperren-Elektronik (z.B. EBS-Elektronik) geprüft, ob eine Rollsperren-Anforderung gesetzt ist (beispielsweise durch einen entsprechenden Schalter), ob weiter die Fahrzeugbremsanlage unbetätigt ist, die Feststellbremse nicht betätigt ist, und ob die Motordrehzahl oberhalb einer Mindestschwelle liegt. Weiterhin kann vorteilhaft auch noch geprüft werden, ob die Bordspannung des Fahrzeugs und/oder der Vorratsdruck bei einem luftdruckgebremsten Fahrzeug jeweils eine Mindestschwelle überschreiten.

Weiter wird zum Halten des Fahrzeuges im Stillstand durch die Rollsperre dann ein Solldruck geeigneter Höhe in die Betriebsbremsanlage eingeleitet, wenn die Rollsperren-Funktion gesetzt ist, das Fahrzeug zum Stehen gekommen ist, und der Fahrer seinen Bremswunsch reduziert. Dabei wird das Fahrzeug durch seine Betriebsbremsanlage gehalten. Sollte das Fahreug anschliessend zurückrollen, muß der Fahrer einen höheren Bremsdruck einsteuern, welcher dann wiederum von der Rollsperre gehalten wird. Dazu werden zweckmässig der vom Fahrer eingesteuerte Bremsdruck und der Rollsperren-Solldruck Ps kontinuierlich verglichen und jeweils das Maximum aus beiden Werten als neuer Solldruck ausgegeben und in die Bremsen als Haltedruck eingesteuert.

Schließlich wird vorteilhaft die Rollsperre nach Ablauf einer Verzögerungszeit wieder gelöst, wenn durch die Elektronik festgestellt wird, daß das Bremspedal oder ein anderes Pedal nicht mehr betätigt ist. Hierdurch wird verhindert, daß die Rollsperren-Funktion wie oben erwähnt als Ersatz für die Feststellbremse benutzt wird, was nicht den Vorschriften entsprechen würde. In diesem Fall wird nach Ablauf einer Verzögerungszeit ein Warnsignal für den Fahrer erzeugt und danach die Bremse gelöst.

Die genannte Verzögerungszeit ist aber weiter auch notwendig, damit der Fahrer beim Anfahren Zeit hat, mit dem Fuß vom Bremspedal zum Fahrpedal zu wechseln. Hierzu beträgt die Verzögerungszeit etwa 1,0 Sekunden.

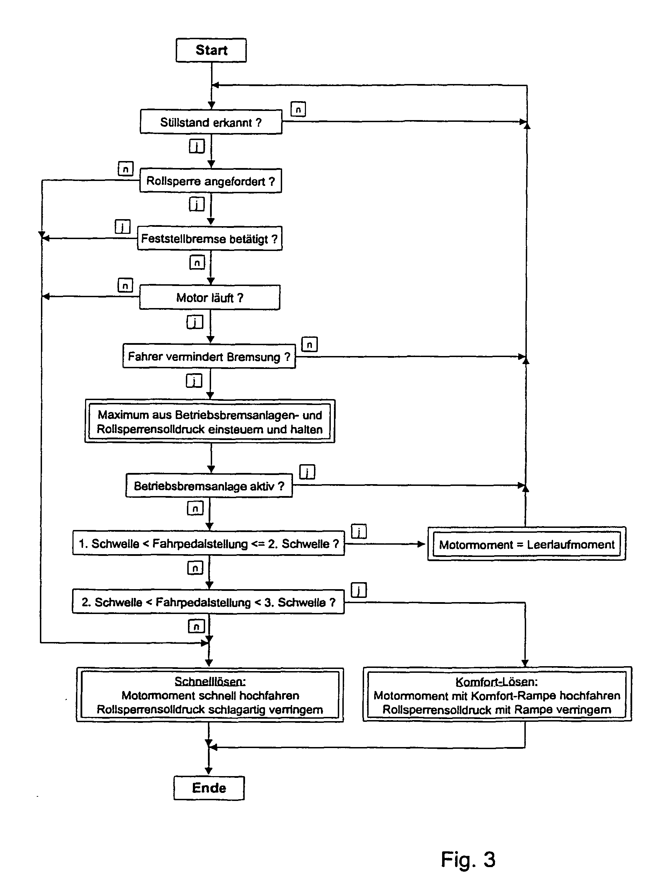

In der Fig. 3 ist ein schematisches, vereinfachtes Flußdiagramm für die Programmierung der erfindungsgemäßen Rollsperre und des Anfahrvorgangs dargestellt.

Nach dem Start des Programms wird zunächst geprüft, ob die Rollsperren-Elektronik einen Stillstand des Fahrzeugs erkannt hat. Ist dies nicht der Fall, wird zum Start zurückgeleitet.

Ist dies dagegen der Fall, wird geprüft, ob die Rollsperren-Funktion angefordert ist, also z. B. vom Fahrer ein entsprechender Rollsperrenschalter eingelegt ist.

Ist dies nicht der Fall, wird gemäß der Anweisung "Schnelllösen" verfahren und anschließend das Programm beendet.

Ist dies jedoch der Fall, wird geprüft, ob der Fahrer die Feststellbremse betätigt hat. Falls dies der Fall ist, wird gemäß der Anweisung "Schnelllösen" verfahren und anschließend das Programm beendet.

Falls dies nicht der Fall ist, wird geprüft, ob der Fahrzeugmotor läuft. Falls dies nicht der Fall ist, wird gemäß der Anweisung "Schnelllösen" verfahren und anschließend das Programm beendet.

Falls dies dagegen der Fall ist, wird geprüft, ob der Fahrer das Bremspedal (Betriebsbremse) betätigt und ob die Bremsung vermindert wird. Ist dies nicht der Fall, wird zum Start zurückgeleitet.

Ist dies dagegen der Fall, wird durch die Rollsperren-Elektronik das Maximum aus dem Druck der Betriebsbremse und dem berechneten Rollsperren-Solldruck in die Betriebsbremse eingesteuert. Hierdurch wird das Fahrzeug im Stand gehalten.

Als nächstes wird geprüft, ob das Fahrzeug wieder in Bewegung gesetzt werden soll. Hierzu wird zunächst geprüft, ob die Betriebsbremsanlage (BBA) betätigt ist. Ist dies der Fall, wird zum Start zurückgeleitet.

Ist dies dagegen nicht der Fall, wird geprüft, ob sich das Fahrpedal in einer Stellung zwischen der ersten und der zweiten Schwelle befindet.

Ist dies der Fall, wird das Motormoment auf Leerlaufmoment geschaltet und zum Start zurückgeleitet.

Ist dies dagegen nicht der Fall, wird weiter geprüft, ob sich das Fahrpedal zwischen der zweiten und der dritten Schwelle befindet.

Ist dies der Fall, wird das Motormoment mit der Komfort-Funktion entsprechend einer geeigneten Rampe hochgefahren (vergl. Fig.1c). Gleichzeitig wird der Rollsperren-Druck ebenfalls in einer Rampe abgebaut (vergl. Fig. 1b). Damit ist das Programm beendet.

Ist dies jedoch nicht der Fall, befindet sich das Fahrpedal oberhalb der dritten Schwelle (Kickdown). In diesem Fall wird ein Motormoment entsprechend der aktuellen Fahrpedalstellung ausgesteuert. Außerdem wird der Rollsperren-Druck schnell auf Null herabgesetzt (Schnellösen, Fig. 2a bis 2c). Damit ist das Rollsperrenprogramm beendet.

Durch die erfindungsgemäße Rollsperren-Steuerung wird eine für den Fahrer besonders praktikable, einfach zu beherrschende Deaktivierung der Rollsperre ermöglicht. Der Anfahrvorgang des Fahrzeugs ist hierdurch in der Komfort-Funktion besonders komfortabel. Gegebenenfalls kann in besonderen Situationen aber auch schnell angefahren werden (Schnellösen). Vorteilhaft ist weiter, daß eine aufwendige Ermittlung des Motormomentes durch einen entsprechenden Sensor an der Antriebswelle nicht benötigt wird.

## Patentansprüche

1. Verfahren für die Steuerung einer Rollsperre für ein Fahrzeug, insbesondere Nutzfahrzeug, mit fremdkraftgespeister Bremsanlage und mit elektronischer Bremssteuerung**,** wobei das Fahrzeug durch seine Betriebs-Bremsanlage im Stillstand auch ohne Fahrer-Betätigung des Bremspedals durch Einsteuern eines Solldruckes in die Radbremsen gehalten werden kann, **dadurch gekennzeichnet, daß** der Solldruck solange gehalten wird, wie das Fahrpedal oberhalb einer ersten definierten Schwelle direkt über der Leerlauf-Stellung, aber unterhalb einer zweiten definierten Schwelle betätigt wird, und daß ein Komfort-Lösen der Rollsperre bewirkt wird, sobald mindestens festgestellt wurde, daß der Motor läuft, ein Gang oder eine Fahrstufe eingelegt ist, und das Fahrpedal die zweite definierte Schwelle überschreitet, und
daß nach kurzzeitigem Überschreiten einer dritten, höheren definierten Schwelle durch das Fahrpedal ein Schnell-Lösen der Rollsperre bewirkt wird, wobei das ausgesteuerte Motormoment nach einer Übergangszeit der aktuellen Fahrpedalstellung entspricht.

2. Verfahren nach Anspruch 1, **dadurch gekennzeichnet, daß** beim Komfort-Lösen der Rollsperre das Motormoment mit einer Rampenfunktion hochgefahren wird.

3. Verfahren nach einem oder beiden der Ansprüche 1 und 2, **dadurch gekennzeichnet, daß** das Komfort-Lösen der Rollsperre nur aktiviert wird, wenn ein Gang oder eine Fahrstufe eingelegt und ein Kupplungspedal nicht mehr vollständig getreten ist.

4. Verfahren nach einem oder mehreren der Ansprüche 1, 2 und 3, **dadurch gekennzeichnet, daß** beim Komfort-Lösen der Rollsperre die Bremsdruck-Absenkung in Abhängigkeit von der Fahrbahnneigung erfolgt.

5. Verfahren nach Anspruch 4, **dadurch gekennzeichnet, daß** in einer Fahrbahn-Steigung die Radbremsen langsam geregelt entlüftet werden.

6. Verfahren nach Anspruch 4, **dadurch gekennzeichnet, daß** in einem Fahrbahn-Gefälle die Radbremsen schnell entlüftet werden.

7. Verfahren nach einem oder mehreren der Ansprüche 1 bis 6, **dadurch gekennzeichnet, daß** als Voraussetzung für eine Aktivierung der Rollsperren-Anfahrfunktion mindestens geprüft wird, ob eine Rollsperren-Anforderung gesetzt ist, ob die Fahrzeugbremsanlage unbetätigt ist, und ob die Motordrehzahl oberhalb einer Mindestschwelle liegt.

8. Verfahren nach einem oder mehreren der Ansprüche 1 bis 7, **dadurch gekennzeichnet, daß** als Voraussetzung für eine Aktivierung der Rollsperren-Funktion weiter geprüft wird, ob die Bordspannung und/oder der Vorratsdruck des Fahrzeugs eine Mindestschwelle überschreiten.

9. Verfahren nach einem oder mehreren der Ansprüche 1 bis 8, **dadurch gekennzeichnet, daß** der Solldruck zum Halten des Fahrzeugs im Stillstand des Fahrzeugs in die Bremsen eingeleitet wird, wenn die Rollsperren- Funktion gesetzt ist, und sobald der Fahrer seinen Bremswunsch reduziert.

10. Verfahren nach einem oder mehreren der Ansprüche 1 bis 9, **dadurch gekennzeichnet, daß** die Rollsperre nach Ablauf einer Verzögerungszeit gelöst wird, wenn festgestellt wird, daß das Bremspedal oder ein anderes Pedal nicht mehr betätigt ist.

11. Verfahren nach Anspruch 10, **dadurch gekennzeichnet, daß** bei oder vor Ablauf der Verzögerungszeit ein Warnsignal für den Fahrer erzeugt wird.

12. Verfahren nach einem oder mehreren der Ansprüche 1 bis 11, **dadurch gekennzeichnet, daß** unmittelbar vor Erreichen der zweiten Schwelle durch das Fahrpedal ein optisches oder akustisches Signal ausgelöst oder die Motordrehzahl kurzzeitig angehoben wird, um dem Fahrer das Erreichen der zweiten Schwelle anzuzeigen.

13. Verfahren nach einem oder mehreren der Ansprüche 1 bis 12, **dadurch gekennzeichnet, daß** beim Halten des Fahrzeugs der vom Fahrer eingesteuerte Bremsdruck und der von der Rollsperre vorgegebene Solldruck kontinuierlich verglichen werden, und das Maximum aus beiden Werten als Haltedruck in die Bremsen eingesteuert und gehalten wird.

14. Verfahren nach einem oder mehreren der Ansprüche 1 bis 13, **dadurch gekennzeichnet, daß** die erste definierte Schwelle bei etwa 10 %, die zweite definierte Schwelle bei etwa 40 %, und die dritte definierte Schwelle bei etwa 90 % des Fahrpedalweges liegt.

## Claims

1. Method for controlling roll-back prevention for a vehicle, especially a commercial vehicle, comprising a power-assist braking system and electronic brake control, it being possible for the vehicle to be held stationary by its service brake system, without actuation of the brake pedal by the driver, by the controlled supply of a desired pressure to the wheel brakes, **characterized in that** the desired pressure is maintained as long as the accelerator pedal is actuated above a first defined threshold directly above the null position but below a second defined threshold, and **in that** comfort deactivation of the roll-back prevention is effected as soon as it has been established at least that the engine is running, a gear or driving position has been engaged and the accelerator pedal has exceeded the second defined threshold, and **in that**, when a third higher defined threshold is momentarily exceeded by the accelerator pedal, rapid deactivation of the roll-back prevention is effected, the engine torque supplied corresponding to the actual position of the accelerator pedal after a transitional period.

2. Method according to claim 1, **characterized in that**, in the case of comfort deactivation of the roll-back prevention, the engine torque is raised with a ramp function.

3. Method according to one or both of claims 1 and 2, **characterized in that** the comfort deactivation of the roll-back prevention is activated only when a gear or a driving position has been engaged and the clutch pedal is no longer fully depressed.

4. Method according to one or more of claims 1, 2 and 3, **characterized in that**, in the case of comfort deactivation of the roll-back prevention, the decrease in brake pressure occurs in dependence upon the incline of the road.

5. Method according to claim 4, **characterized in that** when the road slopes upwards the air in the wheel brakes is vented in a slowly controlled manner.

6. Method according to claim 4, **characterized in that** when the road slopes downwards the air in the wheel brakes is vented rapidly.

7. Method according to one or more of claims 1 to 6, **characterized in that**, as a precondition for activation of the roll-back prevention start-up function, a check is carried out at least as to whether roll-back prevention has been requested, whether the vehicle braking system is not being actuated and whether the engine speed is above a minimum threshold.

8. Method according to one or more of claims 1 to 7, **characterized in that**, as a preconditon for activation of the roll-back prevention function, a check is further carried out as to whether the on-board voltage and/or the supply pressure of the vehicle have exceeded a minimum threshold.

9. Method according to one or more of claims 1 to 8, **characterized in that** the desired pressure for holding the vehicle when the vehicle is stationary is fed into the brakes when the roll-back prevention function is switched on and as soon as the driver reduces his braking requirement.

10. Method according to one or more of claims 1 to 9, **characterized in that** the roll-back prevention is deactivated after a delay time has elapsed when it is established that the brake pedal or another pedal is no longer being actuated.

11. Method according to claim 10, **characterized in that** when or just before the delay time elapses a warning signal is issued to the driver.

12. Method according to one or more of claims 1 to 11, **characterized in that** immediately before the second threshold is reached by the accelerator pedal a visual or audible signal is triggered or the engine speed is momentarily increased in order to indicate to the driver that the second threshold has been reached.

13. Method according to one or more of claims 1 to 12, **characterized in that** when the vehicle is being held the brake pressure regulated by the driver and the desired pressure determined by the roll-back prevention are compared continuously and the maximum from both values is controlledly supplied to the brakes and maintained as holding pressure.

14. Method according to one or more of claims 1 to 13, **characterized in that** the first defined threshold is approximately 10%, the second defined threshold is approximately 40% and the third defined threshold is approximately 90% of the accelerator pedal displacement.

## Revendications

1. Procédé de commande d'un blocage de sécurité de déplacement par roulement libre pour un véhicule, notamment un véhicule utilitaire, comprenant une installation de freinage alimentée par une force extérieure, et une commande électronique de freinage, le véhicule pouvant, à l'arrêt, être immobilisé par son installation de freinage de service, également sans actionnement de la pédale de frein par le conducteur, par envoi commandé d'une pression de consigne dans les freins de roue, **caractérisé en ce qu'**on maintient la pression de consigne aussi longtemps que la pédale d'accélérateur est actionnée au-dessus d'un premier seuil défini directement au-dessus de la position de ralenti, mais en-dessous d'un deuxième seuil défini, et **en ce qu'**on produit un déblocage de confort du blocage de sécurité de déplacement par roulement libre dès que l'on a au moins constaté que le moteur est en marche, qu'un rapport ou une vitesse ou un cran de marche est enclenché, et que la pédale d'accélérateur dépasse le deuxième seuil défini, et **en ce qu'**après un bref dépassement d'un troisième seuil plus élevé, défini, par la pédale d'accélérateur, on produit un déblocage rapide du blocage de sécurité de déplacement par roulement libre, le couple moteur commandé en sortie correspondant, après un temps de transition, à la position actuelle de la pédale d'accélérateur.

2. Procédé selon la revendication 1, **caractérisé en ce que** lors du déblocage de confort du blocage de sécurité de déplacement par roulement libre, on augmente le couple moteur selon une fonction de rampe.

3. Procédé selon l'une des ou les deux revendications 1 et 2, **caractérisé en ce que** le déblocage de confort du blocage de sécurité de déplacement par roulement libre n'est activé que si un rapport ou une vitesse ou un cran de marche est enclenché et qu'une pédale d'embrayage n'est plus totalement enfoncée.

4. Procédé selon l'une ou plusieurs des revendications 1, 2 et 3, **caractérisé en ce que** lors du déblocage de confort du blocage de sécurité de déplacement par roulement libre, l'abaissement de la pression de freinage est effectué en fonction de la déclivité de la chaussée ou voie de circulation.

5. Procédé selon la revendication 4, **caractérisé en ce que** dans une rampe montante de la chaussée, les freins de roue sont desserrés de manière lente et régulée.

6. Procédé selon la revendication 4, **caractérisé en ce que** dans une pente descendante de la chaussée, les freins de roue sont desserrés de manière rapide.

7. Procédé selon l'une ou plusieurs des revendications 1 à 6, **caractérisé en ce qu'**en guise d'hypothèse pour une activation de la fonction de démarrage de blocage de sécurité de déplacement par roulement libre, on vérifie au moins si une demande de blocage de sécurité de déplacement par roulement libre est validée, si l'installation de freinage du véhicule est non actionnée, et si la vitesse de rotation du moteur se situe au-dessus d'un seuil minimum.

8. Procédé selon l'une ou plusieurs des revendications 1 à 7, **caractérisé en ce qu'**en guise d'hypothèse pour une activation de la fonction de blocage de sécurité de déplacement par roulement libre, on vérifie en outre que la tension de bord et/ou la pression de réserve dépassent un seuil minimum.

9. Procédé selon l'une ou plusieurs des revendications 1 à 8, **caractérisé en ce que** la pression de consigne pour l'immobilisation du véhicule, à l'arrêt du véhicule, est envoyée dans les freins lorsque la fonction de blocage de sécurité de déplacement par roulement libre est validée, et dès que le conducteur réduit son souhait de freinage.

10. Procédé selon l'une ou plusieurs des revendications 1 à 9, **caractérisé en ce que** le blocage de sécurité de déplacement par roulement libre est débloqué après un temps de retard, lorsqu'on constate que la pédale de frein ou une autre pédale n'est plus actionnée.

11. Procédé selon la revendication 10, **caractérisé en ce que** lorsque le temps de retard est écoulé ou avant cela, un signal d'alarme est engendré pour le conducteur.

12. Procédé selon l'une ou plusieurs des revendications 1 à 11, **caractérisé en ce que** juste avant que la pédale d'accélérateur atteigne le deuxième seuil, on engendre un signal optique ou acoustique, ou on augmente brièvement la vitesse de rotation du moteur, pour indiquer au conducteur que le deuxième seuil va être atteint.

13. Procédé selon l'une ou plusieurs des revendications 1 à 12, **caractérisé en ce que** lors de l'immobilisation du véhicule, on compare continuellement la pression de freinage commandée par le conducteur et la pression de consigne prescrite par le blocage de sécurité de déplacement par roulement libre, et **en ce que** le maximum des deux valeurs est envoyé et maintenu en tant que pression d'immobilisation dans les freins.

14. Procédé selon l'une ou plusieurs des revendications 1 à 13, **caractérisé en ce que** le premier seuil défini se situe à environ 10%, le deuxième seuil défini à environ 40%, et le troisième seuil défini à environ 90% de la course de déplacement de la pédale d'accélérateur.
